(19) Europäisches Patentamt
European Patent Office
Office européen des brevets

(11) **EP 4 102 463 A1**

(12) **EUROPEAN PATENT APPLICATION**
published in accordance with Art. 153(4) EPC

(43) Date of publication:
**14.12.2022 Bulletin 2022/50**

(21) Application number: **20917552.0**

(22) Date of filing: **10.09.2020**

(51) International Patent Classification (IPC):
***G06T 7/73*** (2017.01)          ***G06T 5/50*** (2006.01)

(52) Cooperative Patent Classification (CPC):
**G06K 9/62; G06N 3/04; G06N 3/08; G06T 5/50; G06T 7/73; G06V 10/24; G06V 10/40**

(86) International application number:
**PCT/CN2020/114484**

(87) International publication number:
**WO 2021/155661 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2020 CN 202010080653**

(71) Applicant: **Huawei Technologies Co., Ltd.**
**Shenzhen, Guangdong 518129, (CN)**

(72) Inventors:
• **QIAO, Yu**
 **Shenzhen, Guangdong 518055 (CN)**

• **YANG, Ze**
 **Shenzhen, Guangdong 518055 (CN)**
• **WANG, Yali**
 **Shenzhen, Guangdong 518055 (CN)**
• **CHEN, Xianyu**
 **Shenzhen, Guangdong 518055 (CN)**
• **LIU, Jianzhuang**
 **Shenzhen, Guangdong 518129 (CN)**
• **YUE, Jun**
 **Shenzhen, Guangdong 518129 (CN)**

(74) Representative: **Gill Jennings & Every LLP**
**The Broadgate Tower**
**20 Primrose Street**
**London EC2A 2ES (GB)**

(54) **IMAGE PROCESSING METHOD AND RELATED DEVICE**

(57)    An image processing method and a related device are disclosed. The method is applied to the field of artificial intelligence. After obtaining a prior bounding box set of a target image, an execution device constructs a bounding box set based on the prior bounding box set, accordingly determines a correlation between each prior bounding box in the prior bounding box set and each bounding box, and finally determines, based on the correlation, a location and/or a category of a target object included in any prior bounding box. A series of transformation operations are performed on the bounding box set, and a feature of each bounding box is integrated into a feature of a prior bounding box, to increase a degree of differentiation between objects included in the prior bounding box. Therefore, background information around an object in the target image is creatively used to help locate or classify the object. This resolves a problem that object categories in the target image are easily confused in a case of a small sample, and significantly improves detection accuracy.

FIG. 6

## Description

This application claims priority to Chinese Patent Application No. 202010080653.0, filed with the China National Intellectual Property Administration on February 5, 2020 and entitled "IMAGE PROCESSING METHOD AND RELATED DEVICE", which is incorporated herein by reference in its entirety.

## TECHNICAL FIELD

This application relates to the field of computer vision, and in particular, to an image processing method and a related device.

## BACKGROUND

Target detection, also referred to as target extraction, is image segmentation based on target geometry and statistical features. Target detection focuses on a specific object in an image, and requires that category information and location information of the specific object be obtained simultaneously. Target detection is applied to a plurality of scenarios, for example, an uncrewed security system, an intelligent transportation system, and an intelligent surveillance system. Currently, performance of target detection is continuously improved with development of various deep learning detection frameworks. For example, detection frameworks of a faster region-convolutional neural network (Faster Region-Convolutional Neural Network, Faster R-CNN), you only look once (You Only Look Once, YOLO), a single shot multibox defender (Single Shot MultiBox Defender, SSD), and the like greatly improve performance of target detection. However, these detection frameworks depend on a large-scale database with a bounding box (Bounding Box, BBox) as a training set. Because obtaining large-scale data is usually labor-, resource-, and cost-consuming, it is difficult to apply the advanced detection frameworks to real life.

To resolve the foregoing problem, currently a commonly used manner is using a small amount of data with a bounding box as a training sample (which may also be referred to as small sample target detection) in a training phase. However, if a large neural network is trained directly based on a small amount of data with a bounding box, serious overfitting may occur. A conventional solution is to use a transfer learning technology. During transfer learning, a network of a detection framework is pre-trained based on a large-scale open-source dataset, a classifier at a last layer is discarded and replaced with a classifier whose dimension is the same as that of a target task, and the classifier is randomly initialized. Then, data of a target domain is fine-tuned, to transfer the network from a task of a source domain to the task of the target domain.

However, the foregoing transfer learning is suitable if there are a large quantity of samples. If there are a small quantity of samples, overfitting still occurs in the foregoing transfer learning. Consequently, performance of target detection cannot meet an actual requirement.

## SUMMARY

Embodiments of this application provide an image processing method and a related device, to construct a bounding box set, calculate a correlation between the bounding box set and any prior bounding box, and finally identify, based on the correlation, a target object included in the prior bounding box. This method improves accuracy compared with a manner of directly detecting the target object in the prior bounding box.

In view of this, embodiments of this application provide the following technical solutions.

According to a first aspect, this application first provides an image processing method. The method may be applied to the field of artificial intelligence, and includes: An execution device first obtains a target image in a target domain, and further obtains a prior bounding box set of the target image. After determining the prior bounding box set of the target image, the execution device constructs a bounding box set based on the prior bounding box set. The bounding box set includes one or more bounding boxes, and the bounding box set includes image information of at least one bounding box. The image information of at least one bounding box includes image information of one prior bounding box in the prior bounding box set. Then, the execution device further obtains a correlation between any prior bounding box in the prior bounding box set and each bounding box in the bounding box set, and finally determines, based on the correlation, a target object included in the any prior bounding box.

In the foregoing implementation of this application, the execution device constructs the bounding box set, calculates a correlation between the bounding box set and any prior bounding box, and finally identifies, based on the correlation, the target object included in the prior bounding box. This method improves accuracy compared with a manner of directly detecting the target object in the prior bounding box.

In a possible implementation of the first aspect, an implementation of how the execution device constructs the bounding box set based on the prior bounding box set may be using, as one bounding box in the bounding box set, an area circled by combining any plurality of prior bounding boxes in the prior bounding box set, that is, the plurality of prior bounding boxes may be combined to form one bounding box. For example, assuming that a quantity of prior bounding boxes included in the prior bounding box set determined by the execution device from the target image is 1000, a manner of constructing the bounding box set may be combining n adjacent prior bounding boxes according to a preset algorithm to form one bounding box. For example, if five adjacent prior bounding boxes are combined to form one bounding box, the formed bounding box set includes 200 bounding boxes. For another example, several prior bounding boxes whose overlapping part exceeds a preset proportion (for example, the overlapping part exceeds 70%) may be combined to form one bounding box. A specific implementation in which a plurality of prior bounding boxes in the prior bounding box set are combined to form one bounding box is not limited herein.

In a possible implementation of the first aspect, another implementation of how the execution device constructs the bounding box set based on the prior bounding box set may be extending outwards a neighborhood of an area circled by each prior bounding box in the prior bounding box set, to obtain the bounding box set.

In the foregoing implementations of this application, several manners of constructing the bounding box set based on the prior bounding box set are specifically described, which facilitates a user performing selection based on a requirement, and is flexible.

In a possible implementation of the first aspect, a manner of expanding each prior bounding box in the prior bounding box set of the execution device may be expanding, according to a preset proportion, an area circled by a prior bounding box, or may be expanding a prior bounding box horizontally and vertically according to different preset proportions. This is not specifically limited herein.

In the foregoing implementation of this application, several manners of expanding each prior bounding box in the prior bounding box set are specifically described, which facilitates the user performing selection based on a requirement, and is flexible.

In a possible implementation of the first aspect, a manner in which the execution device obtains the correlation between any prior bounding box in the prior bounding box set and each bounding box in the bounding box set may include but is not limited to: (1) Obtain an angle between any prior bounding box in the prior bounding box set and each bounding box in the bounding box set. Each bounding box is located at a different angle (because both the bounding box and the prior bounding box are rectangular frames, center points of the rectangular frames may be used for angle calculation). Therefore, a weight value of the corresponding bounding box in all bounding boxes is also different. The weight value indicates an importance degree of the bounding box in a current prior bounding box. A higher weight value indicates a greater correlation between the bounding box and the current prior bounding box, and indicates that the bounding box can increase a degree of differentiation between objects currently included in the prior bounding box. There is a mapping relationship between each angle and the weight value, and a weight value of each bounding box in the bounding box set in all bounding boxes may be determined based on the mapping relationship. (2) Obtain a distance between any prior bounding box in the prior bounding box set and each bounding box in the bounding box set. Similarly, a distance between the bounding box and the current prior bounding box is different (because both the bounding box and the prior bounding box are rectangular frames, center points of the rectangular frames may be used for distance calculation). Therefore, a weight value of the corresponding bounding box in all bounding boxes is also different. There is also a mapping relationship between each distance and the weight value, and a weight value of each bounding box in the bounding box set in all bounding boxes may be determined based on the mapping relationship. (3) Simultaneously obtain an angle and a distance between any prior bounding box in the prior bounding box set and each bounding box in the bounding box set. An obtaining manner is similar to the foregoing manner, but both the distance and the angle need to be considered when a weight value of each bounding box is calculated.

In the foregoing implementation of this application, several manners in which the execution device obtains the correlation between any prior bounding box in the prior bounding box set and each bounding box in the bounding box are specifically described, and are optional.

In a possible implementation of the first aspect, an implementation in which the execution device determines the target object included in the any prior bounding box may be as follows: first determining a correlation (for example, the foregoing weight value) whose value is greater than a preset threshold as a valid correlation, and determining, based on the valid correlation, the target object included in the any prior bounding box.

In the foregoing implementation of this application, an implementation of how to determine the target object based on the correlation is specifically described, and some bounding boxes whose correlation values are less than the threshold are excluded, reducing a calculation amount.

In a possible implementation of the first aspect, another implementation in which the execution device determines the target object included in the any prior bounding box may be as follows: sorting correlation values in descending order, and determining a correlation (for example, the foregoing weight value) ranked before a preset sequence number as a valid correlation; and determining, based on the valid correlation, the target object included in the any prior bounding box.

In the foregoing implementation of this application, another implementation of how to determine the target object based on the correlation is specifically described, and some bounding boxes whose correlation values are ranked top are retained, reducing a calculation amount.

In a possible implementation of the first aspect, a manner in which the execution device constructs the bounding box set based on the prior bounding box set may be specifically as follows: first obtaining a first feature of the prior bounding box set, and then constructing a second feature of the bounding box set based on the first feature. The first feature and the second feature each include feature information of an image block circled by each prior bounding box in the prior bounding box set and each bounding box in the bounding box set.

In the foregoing implementation of this application, information specifically included in the bounding box set constructed by the execution device is described.

In a possible implementation of the first aspect, that the execution device obtains the first feature of the prior bounding box set may be specifically obtaining a first fractional matrix of the prior bounding box set.

In a possible implementation of the first aspect, after obtaining the first feature (for example, the first fractional matrix mentioned above) of the prior bounding box set, the execution device constructs the bounding box set for comparison. Therefore, in this application, after a pooling operation is performed on a feature map of each scale of the target image, a second fractional matrix of a series of bounding box sets is obtained.

In a possible implementation of the first aspect, to compare correlation between any prior bounding box in the prior bounding box set and the bounding box set, in embodiments of this application, comparison is performed based on the first fractional matrix and the second fractional matrix. That is, calculation is performed on the first fractional matrix and the second fractional matrix according to a preset algorithm to obtain a correlation matrix between the first fractional matrix and the second fractional matrix, a correlation coefficient between the any prior bounding box and each bounding box in the bounding box set is determined from the correlation matrix, and after a correlation matrix A between the prior bounding box set and the bounding box set is obtained, features of the bounding boxes are weighted and fused into corresponding prior bounding boxes based on respective importance by using the matrix A. Specifically, a *softmax* operation may be performed on a row of the matrix A to obtain a weight coefficient, in the any prior bounding box, of each bounding box in the bounding box set.

In the foregoing implementations of this application, manners of how to determine the correlation between any prior bounding box in the prior bounding box set and the bounding box set are specifically described, and are operable.

In a possible implementation of the first aspect, that the execution device determines, based on the correlation, the target object included in the any prior bounding box may be: performing weighted summation on each bounding box in the bounding box set based on the weight coefficient, to obtain a third fractional matrix, or coupling the weight coefficient to the first fractional matrix through weighting calculation, to obtain a third fractional matrix; and finally determining, by the execution device, the target object in the any prior bounding box based on the third fractional matrix.

In the foregoing implementation of this application, a manner of how to determine, based on the correlation, the target object included in the any prior bounding box in the prior bounding box set is specifically described, and is operable.

In a possible implementation of the first aspect, when calculating the first fractional matrix and the second fractional matrix according to the preset algorithm to obtain the correlation matrix between the first fractional matrix and the second fractional matrix, the execution device may select a widely used dot product kernel algorithm, or may select another preset algorithm, for example, a Euclidean distance algorithm. The preset algorithm is not specifically limited herein.

In the foregoing implementation of this application, several types of preset algorithms are provided, and are flexible.

In a possible implementation of the first aspect, that the execution device determines, based on the correlation, the target object included in the any prior bounding box may be specifically determining category information and/or location information of the target object.

According to a second aspect, an embodiment of this application provides an execution device, and the execution device has a function of implementing the method according to any one of the first aspect or the possible implementations of the first aspect. The function may be implemented by hardware, or may be implemented by hardware executing corresponding software. The hardware or the software includes one or more modules corresponding to the function.

According to a third aspect, an embodiment of this application provides an execution device. The execution device may include a memory, a processor, and a bus system. The memory is configured to store a program. The processor is configured to invoke the program stored in the memory, to perform the method according to any one of the first aspect or the possible implementations of the first aspect of embodiments of this application.

According to a fourth aspect, this application provides a computer-readable storage medium. The computer-readable storage medium stores instructions. When the instructions are run on a computer, the computer is enabled to perform the method according to any one of the first aspect or the possible implementations of the first aspect.

According to a fifth aspect, an embodiment of this application provides a computer program. When the computer program runs on a computer, the computer is enabled to perform the method according to any one of the first aspect or the possible implementations of the first aspect.

## BRIEF DESCRIPTION OF DRAWINGS

FIG. 1 is a schematic diagram of a structure of an artificial intelligence main framework according to an embodiment of this application;

FIG. 2 is a schematic diagram of a process of detecting an object in an image;

FIG. 3 is a schematic diagram of identifying an object in a target image by a classifier;

FIG. 4 is another schematic diagram of identifying an object in a target image by a classifier;

FIG. 5 is a system architectural diagram of an image processing system according to an embodiment of this application;

FIG. 6 is a schematic diagram of an image processing method according to an embodiment of this application;

FIG. 7 is a schematic diagram of determining a bounding box based on a prior bounding box according to an embodiment of this application;

FIG. 8 is another schematic diagram of determining a bounding box based on a prior bounding box according to an embodiment of this application;

FIG. 9 is a schematic diagram of determining a correlation between a prior bounding box and each bounding box according to an embodiment of this application;

FIG. 10 is a schematic diagram of a detection framework in an execution device according to an embodiment of this application;

FIG. 11 is another schematic diagram of a detection framework in an execution device according to an embodiment of this application;

FIG. 12 is a schematic diagram of a structure of an execution device according to an embodiment of this application; and

FIG. 13 is a schematic diagram of another structure of an execution device according to an embodiment of this application.

## DESCRIPTION OF EMBODIMENTS

Embodiments of this application provide an image processing method and a related device, to construct a bounding box set, calculate a correlation between the bounding box set and any prior bounding box, and finally identify, based on the correlation, a target object included in the prior bounding box. This method improves accuracy compared with a manner of directly detecting the target object in the prior bounding box.

The following describes embodiments of this application with reference to the accompanying drawings. A person of ordinary skill in the art may know that, with development of technologies and emergence of new scenarios, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

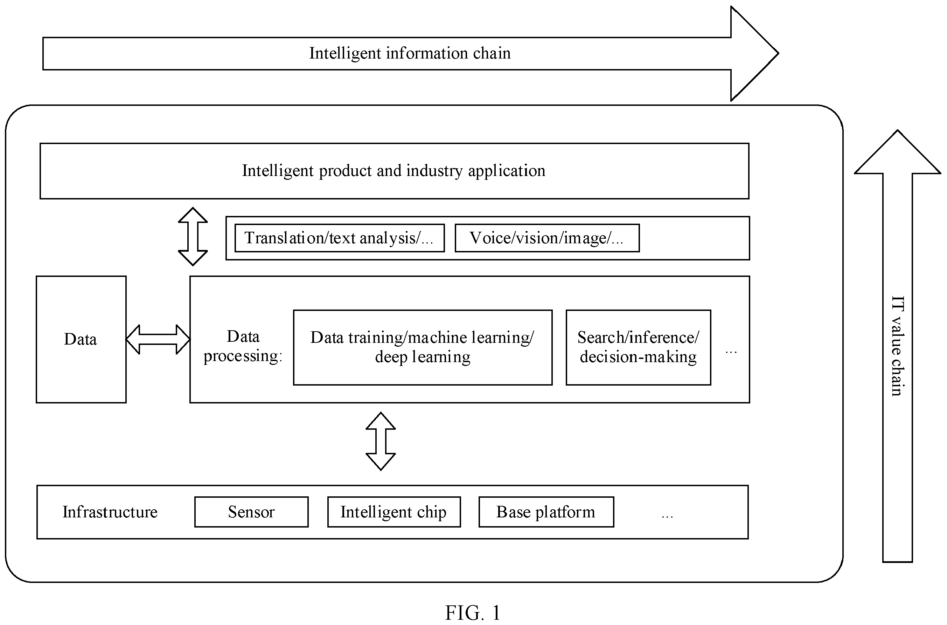

An overall working procedure of an artificial intelligence system is first described. FIG. 1 is a schematic diagram of a structure of an artificial intelligence main framework. The following describes the foregoing artificial intelligence theme framework from two dimensions: "intelligent information chain" (horizontal axis) and "IT value chain" (vertical axis). The "intelligent information chain" reflects a general process from data obtaining to data processing. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry from an underlying infrastructure and information (providing and processing technology implementation) of human intelligence to an industrial ecological process of a system.

(1) Infrastructure

The infrastructure provides computing capability support for the artificial intelligence system, implements communication with the external world, and implements support by using a base platform. A sensor is configured to communicate with the outside. A computing capability is provided by an intelligent chip (a hardware acceleration chip, for example, a CPU, an NPU, a GPU, an ASIC, or an FPGA). The base platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system for computation, where the distributed computing system is provided by the base platform.

(2) Data

Data at an upper layer of the infrastructure is used to indicate a data source in the field of artificial intelligence. The data relates to a graph, an image, a voice, and text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.

Machine learning and deep learning may mean performing symbolic and formalized intelligent information modeling, extraction, preprocessing, training, and the like on data.

Inference is a process in which a human intelligent inferring manner is simulated in a computer or an intelligent system, and machine thinking and problem resolving are performed by using formal information according to an inferring control policy. A typical function is searching and matching.

Decision-making is a process in which a decision is made after intelligent information is inferred, and usually provides functions such as classification, ranking, and prediction.

(4) General capabilities

After data processing mentioned above is performed on data, some general capabilities may be further formed based on a data processing result, for example, an algorithm or a general system, such as translation, text analysis, computer vision processing, speech recognition, and image recognition.

(5) Intelligent product and industry application

Intelligent products and industry applications are products and applications of an artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.

This application may be applied to the image processing field in the artificial intelligence field. Specifically, with reference to FIG. 1, data obtained by the infrastructure in embodiments of this application is a to-be-detected image (each to-be-detected image may be referred to as a target image). Then a prior bounding box set, a bounding box set, and a correlation between any prior bounding box and the bounding box set of the target image are obtained by using a series of operations in the image processing method provided in embodiments of this application. Finally, a target object included in any prior bounding box is identified based on the correlation. This method improves accuracy compared with a manner of directly detecting the target object in the prior bounding box.

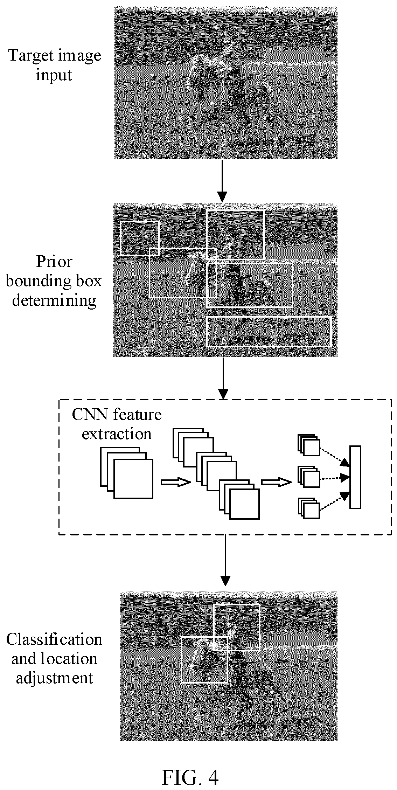

Before embodiments of this application are described, a current framework for implementing a target detection function is first described. The framework may be referred to as a detection framework (which may also be referred to as a detection algorithm). A target (which may also be referred to as an object) in an image is detected by using the constructed detection framework. An image-based target detection task is to find objects of interest in the image, and detect locations and categories of these objects. There are many uncertain factors in a target detection process, for example, an uncertain quantity of objects in the image, different appearances, shapes, and postures of objects, and interference of illumination, blocking, and the like during imaging of objects. As a result, it is difficult to construct the detection framework. Since entering the deep learning era, mainstream deep learning-based detection frameworks are classified into two types. One is a two-stage (two-stage) method, such as R-CNN, Fast R-CNN, and Faster R-CNN detection frameworks, to divide target detection tasks into regression and classification tasks. The other is a one-stage (one-stage) method, such as YOLO and SSD detection frameworks, to complete detection and regression tasks at the same time. A main difference between the two is that the two-stage algorithm first generates one or more prior bounding boxes (which may also be referred to as candidate bounding boxes) that may include a to-be-inspected object, and then performs fine-grained object detection. The one-stage algorithm directly extracts features from a network to predict a category and a location of an object. Regardless of the detection framework of the two-stage algorithm or the detection framework of the one-stage algorithm, an idea of detecting an object in an image is similar. As shown in FIG. 4, the following steps are generally included: (1) Input a target image. (2) Determine a specific quantity of prior bounding boxes in the input target image. (3) Extract a feature from an image block in each prior bounding box by using a deep neural network, for example, extract a feature by using a convolutional neural network (Convolutional Neural Network, CNN). (4) Use a classifier to determine whether the feature extracted from each prior bounding box belongs to a specific category. (5) Further adjust a location of a prior bounding box that has a specific feature, for example, use a regressor to adjust the location. After the foregoing several steps, category information and location information of each target in the image may be detected.

It should be noted that a prior bounding box refers to an anchor box, and these bounding boxes have different length-width ratios. A classification task of each detection framework is based on features of these bounding boxes. For a same input image, different detection frameworks determine a prior bounding box of the image in different manners. Therefore, quantities of determined prior bounding boxes are also different. For example, for an input image, an R-CNN determines about 1000 to 2000 prior bounding boxes, and an SSD determines about 9000 prior bounding boxes. In other words, when an image is input to these detection frameworks, the detection framework automatically determines, based on an algorithm of the detection framework, a quantity of prior bounding boxes included in the image and a size and a location of each prior bounding box. A specific process of determining a prior bounding box by the detection framework is not described herein.

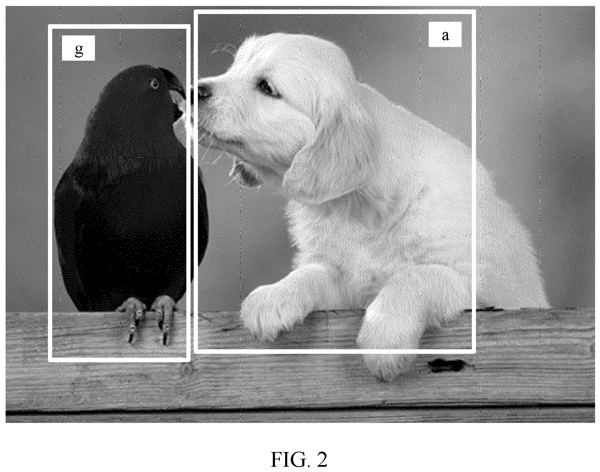

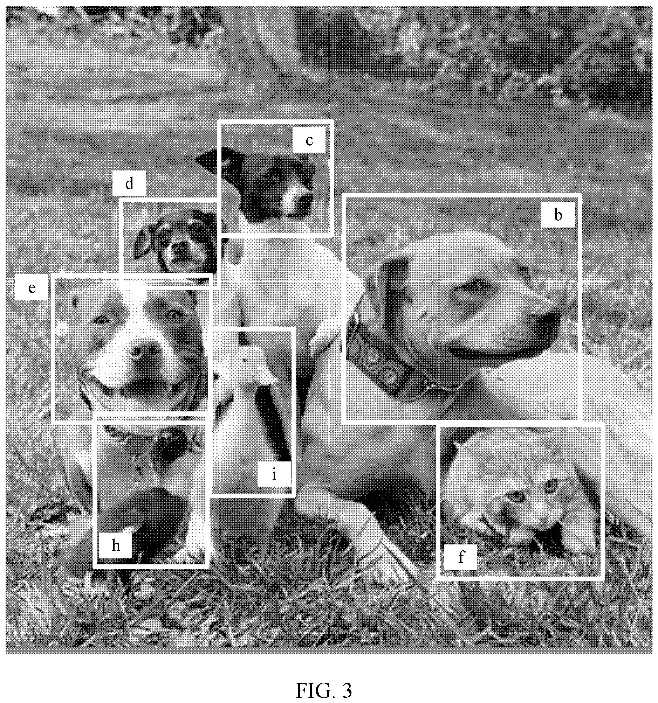

It should be noted that precision and accuracy of the detection framework are related to categories that can be distinguished by the classifier in step (4). For example, if the classifier can identify 30 categories of objects, including "dog" and "cat" of animals, the classifier can identify that a target corresponding to a prior bounding box a in FIG. 2 is "dog", and can also identify that targets corresponding to prior bounding boxes b to e in FIG. 3 are "dog", and a target corresponding to a prior bounding box f is "cat". If the classifier can identify 60 categories of objects, including not only "dog" and "cat" of animals, but also "bird" and "duck", the classifier can further identify that a target corresponding to a prior bounding box g in FIG. 2 is "bird", and can further identify that targets corresponding to prior bounding boxes h and i in FIG. 3 are "duck". If the classifier can identify 200 categories of objects, including not only "dog", "cat", "bird", and "duck" of animals, but also "dog 1", "dog 2", "dog 3", ..., and the like of dogs, the classifier further identifies detailed categories of dogs in FIG. 2 and FIG. 3. In other words, for a target image input into the detection framework, whether an object in the target image can be detected depends on categories of objects that can be recognized by the classifier in the detection framework. For categories (for example, grass and trees in the image) that cannot be recognized, even if the objects that cannot be recognized corresponds to one or more prior bounding boxes at the beginning, the object is not finally identified in an output result.

The classifier in the detection framework is essentially a target model/rule that determines a value of a parameter variable. If expressions of the target model/rule and values of the parameter variable are different, types of the classifier, categories of objects that can be recognized by the classifier, and the like are also different. Before the target image is detected, a network of the detection framework is first pre-trained on a large-scale open-source dataset (that is, an existing large-scale image set, which may be referred to as a source domain), to obtain a value of each parameter variable of the classifier. In this case, the classifier may be referred to as a source domain classifier. After the source domain classifier is trained, detection on an input target image (the target image is no longer the existing large-scale image set, but an image that needs to be detected and that is obtained by a user in a real life scenario, for example, an image captured by a surveillance system or an image captured by a client device; if one or more target images are to be detected, a set including the one or more target images may be referred to as a target domain) is generally performed in the following manners: Manner 1: The target image is directly input into the source domain classifier after steps such as prior bounding box extraction and CNN feature extraction are performed on the target image, and the trained source domain classifier detects an object in the target image. This manner has a high requirement on a quantity of target images in the target domain. Otherwise, serious overfitting occurs. Manner 2: After steps such as prior bounding box extraction and CNN feature extraction are performed on the target image, the target image is directly input into another classifier (which may be referred to as a target domain classifier, that is, replacing the original source domain classifier with the target domain classifier) whose dimension is the same as that of a target task, and the another classifier is randomly initialized. Then fine-tuning is performed on the target domain classifier, and the target domain classifier detects an object in the target image, to transfer the network from a task of a source domain to the task of the target domain. This manner is applicable only to a case in which a quantity of target images in the target domain is not very small. When a quantity of target images in the target domain is very small, overfitting still occurs in the foregoing manner 2. Consequently, performance of target detection cannot meet an actual requirement.

Based on this, to resolve the foregoing problem, an embodiment of this application provides an image processing method. The method is essentially reconstructing an existing detection framework (which may also be referred to as a detection algorithm), so that even if there is only one target image in a target domain, a function of accurately detecting the target image can be implemented.

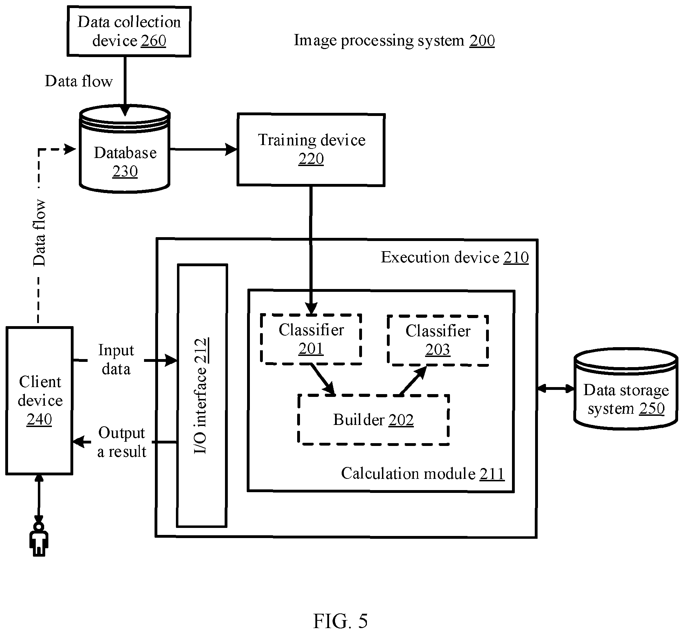

FIG. 5 is a system architectural diagram of an image processing system according to an embodiment of this application. In FIG. 5, an image processing system 200 includes an execution device 210, a training device 220, a database 230, a client device 240, a data storage system 250, and a data collection device 260. The execution device 210 includes a calculation module 211. The calculation module 211 is essentially a detection framework provided in this embodiment of this application.

The data collection device 260 is configured to obtain a large-scale open-source dataset (that is, a source domain) required by a user, and store the source domain in the database 230. The training device 220 trains a classifier 201 based on the maintained source domain in the database 230. The execution device 210 may invoke data, code, and the like in the data storage system 250, or may store data, instructions, and the like in the data storage system 250. The data storage system 250 may be disposed in the execution device 210, or the data storage system 250 may be an external memory relative to the execution device 210.

The classifier 201 trained by the training device 220 may be applied to different systems or devices (that is, the execution device 210), for example, a mobile phone, a tablet, a notebook computer, a surveillance system, and a security system. In FIG. 5, an I/O interface 212 is configured for the execution device 210, to exchange data with an external device. A "user" may input data to the I/O interface 212 by using the client device 240. For example, the client device 240 may be a camera device in a surveillance system. A target image captured by using the camera device is input as input data to the calculation module 211 of the execution device 210. The calculation module 211 detects the input target image to obtain a detection result, and then outputs the detection result to the camera device or directly displays the detection result on a display interface (if exists) of the execution device 210. In addition, in some implementations of this application, the client device 240 may alternatively be integrated into the execution device 210. For example, when the execution device 210 is a mobile phone, the mobile phone may directly capture a target image by using a camera or receive a target image sent by another device (for example, another mobile phone), and then the calculation module 211 in the mobile phone detects the target image to obtain a detection result, and directly presents the detection result on a display interface of the mobile phone. Product forms of the execution device 210 and the client device 240 are not limited herein.

It should be noted that, in this embodiment of this application, in addition to the classifier 201 (that is, the foregoing source domain classifier) generated through training by the training device 220, the calculation module 211 further includes a builder 202 and a classifier 203. The builder 202 is configured to perform a series of operations such as constructing a bounding box set based on a prior bounding box set of a target image and calculating a correlation. The classifier 203 is used as a target domain classifier to output a detection result of the target image based on the correlation, that is, identify a target object in the target image.

It should be noted that FIG. 5 is merely a schematic diagram of a system architecture according to this embodiment of this application, and a location relationship between devices, components, modules, and the like shown in the figure does not constitute any limitation. For example, in FIG. 5, the data storage system 250 is an external memory relative to the execution device 210. In another case, the data storage system 250 may alternatively be disposed in the execution device 210. In FIG. 5, the client device 240 is a peripheral device relative to the execution device 210. In another case, the client device 240 may alternatively be integrated into the execution device 210.

It should be further noted that, in some implementations of this application, the builder 202 may be further split into a plurality of submodules/subunits to jointly implement the solutions provided in this embodiment of this application. This is not specifically limited herein.

The following describes an image processing method provided in an embodiment of this application.

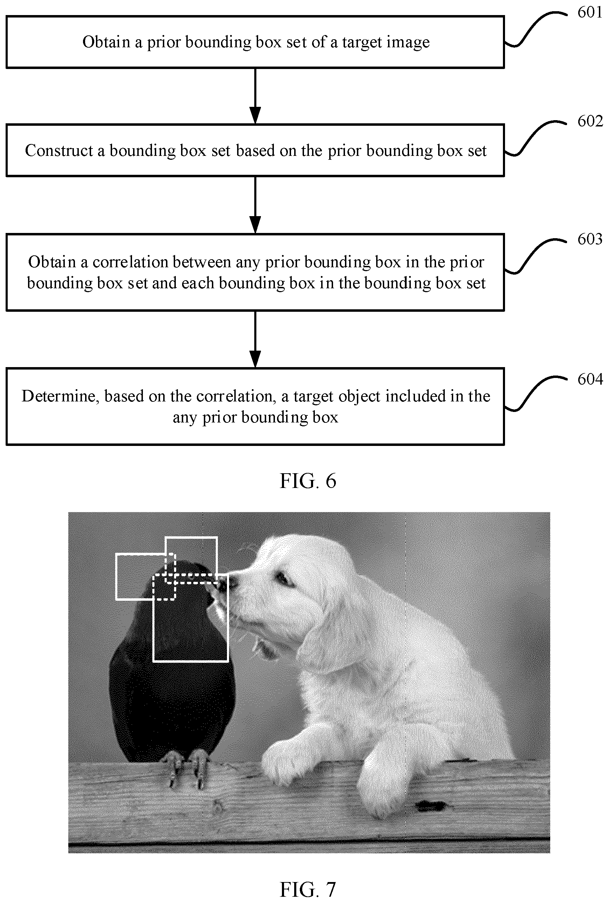

Refer to FIG. 6.

601: Obtain a prior bounding box set of a target image.

An execution device first obtains the target image in a target domain, and further obtains the prior bounding box set of the target image. Because a detection framework constructed in this embodiment of this application is reconstructed based on an existing detection framework such as an R-CNN or an SSD, the detection framework constructed in this application retains an algorithm of "how each detection framework determines a prior bounding box set based on an input target image". In other words, when the target image is input to the calculation module 211 in FIG. 5, the calculation module may automatically determine, based on an existing algorithm, a quantity of prior bounding boxes included in the target image and a size and a location of each prior bounding box. Details are not described herein.

602: Construct a bounding box set based on the prior bounding box set.

After determining the prior bounding box set of the target image, the execution device constructs the bounding box set based on the prior bounding box set. The bounding box set includes one or more bounding boxes, and the bounding box set includes image information of at least one bounding box. The image information of at least one bounding box includes image information of one prior bounding box in the prior bounding box set.

It should be noted that, in some implementations of this application, manners of how the execution device constructs the bounding box set based on the prior bounding box set include but are not limited to the following manners:

    a. A plurality of prior bounding boxes are combined to form one bounding box.

The execution device constructs the bounding box set based on the prior bounding box set may be that a plurality of prior bounding boxes are combined to form one bounding box, that is, an area circled by combining any plurality of prior bounding boxes in the prior bounding box set is used as one bounding box in the bounding box set. For example, assuming that a quantity of prior bounding boxes included in the prior bounding box set determined by the execution device from the target image is 1000, a manner of constructing the bounding box set may be combining n adjacent prior bounding boxes according to a preset algorithm to form one bounding box. For example, if five adjacent prior bounding boxes are combined to form one bounding box, the formed bounding box set includes 200 bounding boxes. For another example, several prior bounding boxes whose overlapping part exceeds a preset proportion (for example, the overlapping part exceeds 70%) may be combined to form one bounding box. A specific implementation in which a plurality of prior bounding boxes in the prior bounding box set are combined to form one bounding box is not limited herein. For example, refer to FIG. 7. Dashed lines form three adjacent prior bounding boxes in the target image, and an area circled by combining the three adjacent prior bounding boxes forms one bounding box, as shown by a solid box in FIG. 7.

b. Each prior bounding box extends outwards a neighborhood.

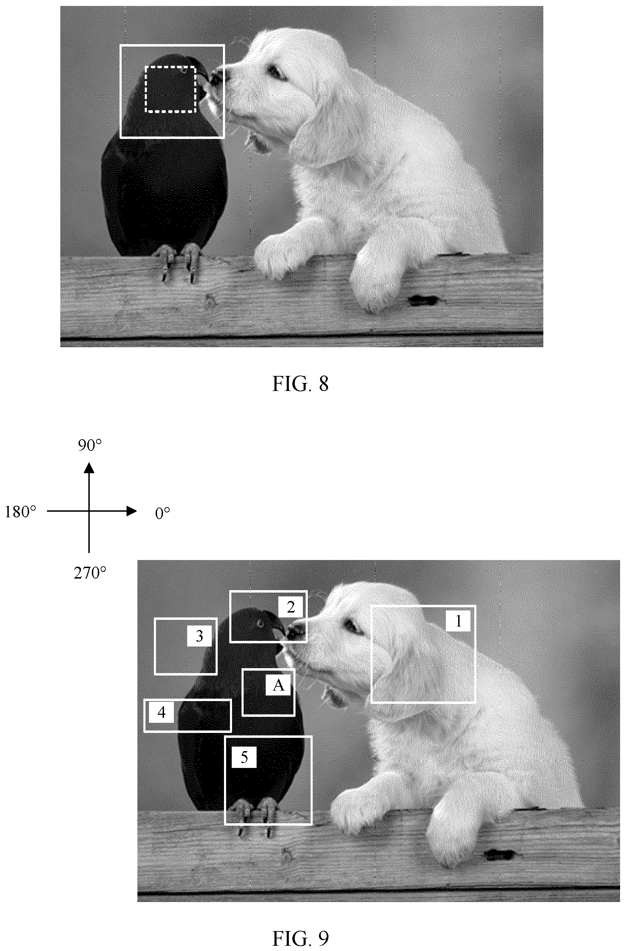

The execution device constructs the bounding box set based on the prior bounding box set may alternatively be extending outwards a neighborhood of an area circled by each prior bounding box in the prior bounding box set, to obtain each bounding box. For example, an area circled by a prior bounding box may be expanded according to a preset proportion, or a prior bounding box may be expanded horizontally and vertically according to different preset proportions. This is not specifically limited herein. It should be noted that, in some implementations of this application, if a bounding box obtained by expanding according to the preset proportion exceeds a border of the target image, the border of the target image is used as one side of the bounding box. In a word, an area circled by each bounding box in the constructed bounding box set does not exceed the border of the target image. For example, refer to FIG. 8. Dashed lines constitute an area circled by a prior bounding box in the target image, and a bounding box obtained by expanding the prior bounding box according to the preset proportion (for example, a prior bounding box size:a bounding box size = 1:2) is shown by a solid box.

603: Obtain a correlation between any prior bounding box in the prior bounding box set and each bounding box in the bounding box set.

After constructing the bounding box set based on the prior bounding box set, the execution device further obtains the correlation between any prior bounding box in the prior bounding box set and each bounding box in the bounding box set. The execution device may obtain the correlation between any prior bounding box in the prior bounding box set and each bounding box in the bounding box set in but not limited to the following manners:

 a. Obtain an angle between any prior bounding box in the prior bounding box set and each bounding box in the bounding box set.

Each bounding box is located at a different angle (because both the bounding box and the prior bounding box are rectangular frames, center points of the rectangular frames may be used for angle calculation). Therefore, a weight value of the corresponding bounding box in all bounding boxes is also different. The weight value indicates an importance degree of the bounding box in a current prior bounding box. A higher weight value indicates a greater correlation between the bounding box and the current prior bounding box, and indicates that the bounding box can increase a degree of differentiation between objects included in the current prior bounding box. There is a mapping relationship between each angle and the weight value, and a weight value of each bounding box in the bounding box set in all bounding boxes may be determined based on the mapping relationship. FIG. 9 is used as an example for illustration. It is assumed that there are five bounding boxes in the bounding box set constructed in FIG. 9, which are respectively a bounding box 1, a bounding box 2, ..., and a bounding box 5. To determine a correlation between a prior bounding box A in the prior bounding box set and each of the five bounding boxes, an angle at which each bounding box is located in the prior bounding box A may be separately calculated. A horizontal direction is 0° as a reference. If angles at which bounding boxes 1 to 5 are located in the prior bounding box A are respectively 20°, 90°, 120°, 200°, and 270°, and it is further obtained, based on a mapping relationship, that normalized weight values corresponding to 20°, 90°, 120°, 200°, and 270° are 0.13, 0.25, 0.17, 0.20, and 0.25, it indicates that the bounding box 2 and the bounding box 5 have the greatest correlation with the prior bounding box A, and correlations between the bounding box 4, the bounding box 3, and the bounding box 1 and the prior bounding box A are in descending order. That is, correlations between the bounding boxes and the prior bounding box A are sorted as follows: bounding box 2 = bounding box 5 > bounding box 4 > bounding box 3 > bounding box 1.

b. Obtain a distance between any prior bounding box in the prior bounding box set and each bounding box in the bounding box set.

Similar to the foregoing description, a distance between the bounding box and the current prior bounding box is different (because both the bounding box and the prior bounding box are rectangular frames, center points of the rectangular frames may be used for distance calculation). Therefore, a weight value of the corresponding bounding box in all bounding boxes is also different. There is also a mapping relationship between each distance and the weight value, and a weight value of each bounding box in the bounding box set in all bounding boxes may be determined based on the mapping relationship. FIG. 9 is still used as an example for illustration. Similar to angle calculation, distances between the bounding boxes 1 to 5 and the prior bounding box A may also be calculated, and then normalized weight values corresponding to the bounding boxes and the prior bounding box A are determined based on the mapping relationship. Assuming that the normalized weight values obtained through calculation are respectively 0.10, 0.27, 0.18, 0.23, and 0.22, it indicates that correlations between the bounding boxes and the prior bounding box A are sorted as follows: bounding box 2 > bounding box 4 > bounding box 5 > bounding box 3 > bounding box 1.

c. Obtain an angle and a distance between any prior bounding box in the prior bounding box set and each bounding box in the bounding box set.

The foregoing manner a and manner b respectively determine the correlation from an angle or a distance between each bounding box and a prior bounding box. To improve precision of determining the correlation, in some implementations of this application, an angle and a distance between any prior bounding box in the prior bounding box set and each bounding box may be obtained at the same time. An obtaining manner is similar to the foregoing manner, but both the distance and the angle need to be considered when the weight value of each bounding box is calculated. For example, both the distance factor and the angle factor may account for 50%, or the distance factor may account for a larger proportion (for example, the distance factor accounts for 60%, and the angle factor accounts for 40%), or the angle factor may account for a larger proportion (for example, the distance factor accounts for 30%, and the angle factor accounts for 70%). This is not specifically limited herein. FIG. 9 is still used as an example. It is assumed that preset proportions of the distance factor and the angle factor are 60% and 40% respectively. Using the bounding box 1 as an example, a normalized weight value obtained through calculation is 0.13*40% + 0.10*60% = 0.112. Similarly, weight values of bounding boxes 2 to 5 are also obtained through similar calculation, and details are not described herein again.

It should be noted that, in the foregoing several manners, one prior bounding box (that is, the prior bounding box A in FIG. 9) in the prior bounding box set is used as an example to describe a step of determining a correlation between the prior bounding box and all bounding boxes in the bounding box set. Any other prior bounding box in the prior bounding box set determines a correlation in a manner similar to the foregoing manner. For example, assuming that there are 1000 prior bounding boxes in the prior bounding box set, and 500 bounding boxes in the constructed bounding box set, correlations between each prior bounding box in the 1000 prior bounding boxes and the 500 bounding boxes in the bounding box set may be determined in a manner similar to the foregoing manner, to obtain the correlations between each prior bounding box in the prior bounding box set and the 500 bounding boxes.

604: Determine, based on the correlation, a target object included in the any prior bounding box.

After obtaining the correlation between any prior bounding box and each bounding box in the bounding box set, the execution device may determine the target object included in the any prior bounding box, and may specifically determine category information of the target object and/or location information of the target object in the prior bounding box. The execution device may determine, in but not limited to the following manners, the target object included in the any prior bounding box:

a. Determine a correlation (for example, the foregoing weight value) whose value is greater than a preset threshold as a valid correlation, and determine, based on the valid correlation, the target object included in the any prior bounding box.

FIG. 9 is still used as an example for description. If only the angle factor is considered, normalized weight values of the bounding boxes 1 to 5 are 0.13, 0.25, 0.17, 0.20, and 0.25 respectively. If the preset threshold is 0.2, the bounding box 1 and the bounding box 3 are discarded. In other words, it indicates that the bounding box 1 and the bounding box 3 do not contribute to increasing a degree of differentiation between objects currently included in the prior bounding box A, only the bounding box 2, the bounding box 4, and the bounding box 5 can increase a degree of differentiation between objects currently included in the prior bounding box A. In this case, only features of the bounding box 2, the bounding box 4, and the bounding box 5 are fused into the prior bounding box A, to determine the target object included in the prior bounding box A.

b. Sort correlation values in descending order, and determine a correlation (for example, the foregoing weight value) ranked before a preset sequence number as a valid correlation; and determine, based on the valid correlation, the target object included in the any prior bounding box.

FIG. 9 is still used as an example for description. If only the distance factor is considered, normalized weight values of the bounding boxes 1 to 5 are 0.10, 0.27, 0.18, 0.23, and 0.22 respectively. In this case, it indicates that correlations between the bounding boxes and the prior bounding box A are sorted as follows: bounding box 2 (that is, a sequence number 1) > bounding box 4 (that is, a sequence number 2) > bounding box 5 (that is, a sequence number 3) > bounding box 3 (that is, a sequence number 4) > bounding box 1 (that is, a sequence number 5). Assuming that a value of the preset sequence number is 4, it indicates that only correlations corresponding to the bounding box 2, the bounding box 4, and the bounding box 5 ranked before the sequence number 4 are valid correlations. In other words, only the bounding box 2, the bounding box 4, and the bounding box 5 can increase a degree of differentiation between objects currently included in the prior bounding box A. In this case, only features of the bounding box 2, the bounding box 4, and the bounding box 5 are fused into the prior bounding box A to determine the target object included in the prior bounding box A. It should be noted that, in some implementations of this application, correlation values may also be sorted in descending order, and correlations ranked after the preset sequence number are determined as valid correlations. Details are not described herein again.

It should be noted that, in the foregoing two manners of this application, a bounding box that cannot increase a degree of differentiation between objects currently included in the prior bounding box is first removed, and only a bounding box with the valid correlation is used to determine the target object included in the prior bounding box. This reduces a calculation amount.

In the foregoing implementation of this embodiment of this application, the execution device constructs the bounding box set, calculates a correlation between the bounding box set and any prior bounding box, and finally identifies, based on the correlation, the target object included in the prior bounding box. This method improves accuracy compared with a manner of directly detecting the target object in the prior bounding box.

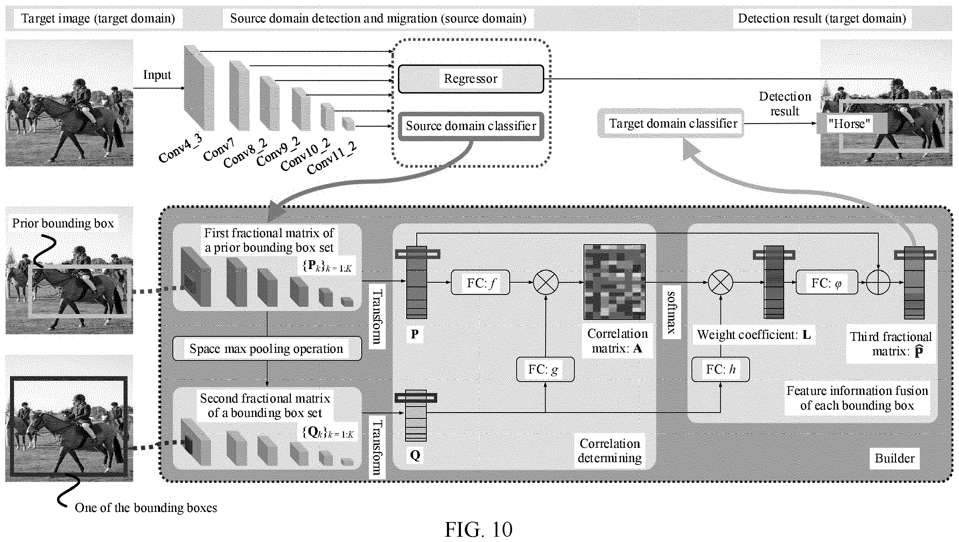

For ease of understanding, the following uses an SSD detection framework as an example to describe improvements made in this application based on an original SSD detection framework. First, structural composition of the builder 202 in the calculation module 211 in the execution device 210 in FIG. 5 in this embodiment of this application is described in detail. The builder 202 is an innovative module, and can be flexibly embedded between the classifier 201 (that is, the source domain classifier) and the classifier 203 (that is, the target domain classifier). The builder 202 can automatically construct a bounding box set and performs a series of change operations on the bounding box set, and finally integrates feature information in the bounding box set into feature information of the prior bounding box, to increase a differentiation degree of the feature information of the prior bounding box. For details, refer to FIG. 10.

In the SSD-type detection framework provided in this embodiment of this application, the SSD-type detection framework runs a CNN network on an input target image and calculates feature mapping, and uses multi-scale feature maps for detection. The multi-scale means that feature maps of different sizes are used. Generally, a feature map of the CNN network is relatively large in an early stage, and then a convolution or pooling (pooling) layer with stride = 2 is gradually used to reduce a size of the feature map. Both a relatively large feature map and a relatively small feature map are used for detection. An advantage of this is that the relatively large feature map is used to detect a relatively small object, and the relatively small feature map is used to detect a relatively large object. A Conv4_3 layer of the SSD is used as a first feature map used for detection, and Conv7, Conv8_2, Conv9_2, Conv10_2, and Conv11_2 are extracted from a newly added convolution layer as feature maps used for detection. Including Conv4_3, a total of six feature maps are extracted from the input target image (as shown in FIG. 10), and sizes of the six feature maps are respectively (38*38), (19*19), (10*10), (5*5), (3*3), and (1*1). Different feature maps are set with different quantities of prior bounding boxes (a same quantity of prior bounding boxes is set for each unit in a same feature map, and the quantity herein refers to a quantity of prior bounding boxes of one unit), and there are 8732 prior bounding boxes in total. The settings of the prior bounding box include two aspects: scale (or size) and length-width ratio. For the scale of the prior bounding box, it follows a linear increasing rule: as a size of the feature map decreases, the scale of the prior bounding box increases linearly.

For a target image in a target domain, first, the SSD detection framework automatically extracts the foregoing six feature maps based on an input target image, and determines a prior bounding box set of a specific quantity and size from the six feature maps. Then, the target image is sent to a pre-trained source domain classifier (that is, the classifier 201 in FIG. 5), a first feature of a prior bounding box set corresponding to the target image is extracted, and a second feature of a bounding box set is constructed based on the first feature. The first feature and the second feature each include feature information of an image block circled by each prior bounding box in the prior bounding box set and each bounding box in the bounding box set. Specifically, a first fractional matrix of the prior bounding box set may be extracted as follows:

$$P_k \in \mathbb{R}^{H_k \times W_k \times (M_k \times C_s)}, \qquad k = 1, \dots, K$$

In the formula, k refers to a $k^{\text{th}}$ spatial scale in the SSD detection framework (that is, a size of the feature map, for example, 38*38 or 19*19; if there are six spatial scales in the SSD detection framework, there are six values of k), $H_k \times W_k$ refers to a spatial scale size of a $k^{\text{th}}$ spatial scale, $M_k$ refers to a quantity of prior bounding boxes corresponding to each point in a feature map at the $k^{\text{th}}$ spatial scale, and Cs indicates a quantity of categories in the source domain classifier.

After the first feature (for example, the first fractional matrix mentioned above) of the prior bounding box set is obtained, in this application, the bounding box set is constructed for comparison. Therefore, in this application, a pooling operation is performed on a feature map of each scale to obtain a second fractional matrix of a series of bounding box sets:

$$Q_k = SpatialPool(P_k), \qquad k = 1, \dots, K$$

In the formula $Q_k \in \mathbb{R}^{U_k \times V_k \times (M_k \times C_s)}$, $U_k \times V_k$ represents a spatial scale size of the $k^{\text{th}}$ scale after the pooling operation.

Specifically, in some implementations of this application, the pooling operation may be performed only on feature maps of first four scales. Pooling kernel sizes (kernel sizes) are respectively [3, 2, 2, 2], and stride (stride) sizes are consistent with the pooling kernel sizes, that is, [3,2,2,2]. For feature maps of the last two scales, because the spatial scales of the feature maps are relatively small, the pooling operation may not be performed. Spatial scales of the feature maps of the bounding box sets on which the pooling operation is performed are respectively 13 * 13,10*10,5*5,3*3, 3*3,1*1.

To compare correlation between any prior bounding box in the prior bounding box set and the bounding box set, in this embodiment of this application, comparison is performed based on a first fractional matrix and a second fractional matrix. That is, calculation is performed on the first fractional matrix and the second fractional matrix according to a preset algorithm to obtain a correlation matrix between the first fractional matrix and the second fractional matrix, and a correlation coefficient between the any prior bounding box and each bounding box in the bounding box set is determined from the correlation matrix. For ease of calculation, herein, $P_{1:K}$ and

$Q_{1:K}$ are transformed into $P \in \mathbb{R}^{D_p \times C_s}$ and $Q \in \mathbb{R}^{D_q \times C_s}$, and each row of P (or Q) refers to a fractional vector of a prior bounding box (or a bounding box). In addition, $D_p = \sum_{k=1}^{K} H_k \times W_k \times M_k$ and

$D_q = \sum_{k=1}^{K} U_k \times V_k \times M_k$ are respectively a total quantity of prior bounding boxes and a total quantity of bounding boxes in a target domain image. For ease of understanding, in this embodiment of this application, a widely used dot product kernel algorithm (or another preset algorithm, for example, a Euclidean distance algorithm, where the preset algorithm is not specifically limited herein) is selected to compare a correlation between $P$ and $Q$. Therefore, according to the dot product kernel algorithm, the correlation matrix between the first fractional matrix of the prior bounding box set and the second fractional matrix of the bounding box set is obtained as follows:

$$A = f(P) \times g(Q)^{\top}, \qquad A \in \mathbb{R}^{D_p \times D_q}$$

The vector $A(i,:) \in \mathbb{R}^{1 \times D_q}$ represents a correlation coefficient between an $i^{th}$ prior bounding box and all bounding boxes in the bounding box set. $f(P) \in \mathbb{R}^{D_p \times C_s}$ and $g(Q) \in \mathbb{R}^{D_q \times C_s}$ are feature representations of the prior bounding box set and the bounding box set. $f$ (or $g$) is a fully connected layer (for example, may be a fully connected layer with a residual connection) shared by all prior bounding boxes (or all bounding boxes). These layers can improve flexibility of correlation comparison. In a word, the construction of the correlation matrix enables each prior bounding box to automatically find the bounding boxes that are important to the prior bounding box from the bounding box sets of different length-width ratios, different scales, and different locations. This diversified correlation provides a discriminatory basis for reducing confusion of object categories.
After the correlation matrix A between the prior bounding box set and the bounding box set is obtained, the features of the bounding boxes are weighted and fused into corresponding prior bounding boxes according to respective importance by using the matrix A. Specifically, a *softmax* operation may be performed on a row of the matrix A to obtain a weight coefficient, in the any prior bounding box, of each bounding box in the bounding box set. In this case, *softmax*(A(i,:)) becomes a weight vector, and represents importance of each bounding box to the $i^{th}$ prior bounding box. Then, the weight vector is further used to perform weighted fusion on the features of the bounding boxes, to obtain a weight coefficient of each bounding box in the bounding box set in any prior bounding box, and the weight coefficient is as follows:

$$L(i,:) = \text{softmax}(A(i,:)) \times h(Q)$$

In the formula, $L(i,:)$ is a weight coefficient of each bounding box corresponding to the $i^{th}$ prior bounding box, and $h(Q) \in \mathbb{R}^{D_q \times C_s}$ is a feature representation of the bounding box set, where $h$ is a fully connected layer, and is used to increase learning flexibility. It should be noted that, in some implementations of this application, $h(Q)$ may be not required. In other words, in some implementations of this application, a weight coefficient of each bounding box in the bounding box set in any prior bounding box may alternatively be $L(i,:) = \text{softmax}(A(i,:))$.
Finally, weighted summation is performed on each bounding box in the bounding box set based on the weight coefficient, to obtain a third fractional matrix:

$$\hat{P} = \varphi(L), \qquad \hat{P} \in \mathbb{R}^{D_p \times C_s}$$

It should be noted that, in some implementations of this application, the weight coefficient may also be coupled to the first fractional matrix through weighting calculation, to obtain a third fractional matrix:

$$\hat{P} = P + \varphi(L), \; \hat{P} \in \mathbb{R}^{D_p \times C_s}.$$

$\varphi$ is a fully connected layer, and is used to increase learning flexibility.
A processing manner of adding the weight coefficient $L \in \mathbb{R}^{D_p \times C_s}$ of the feature of each bounding box in the bounding box set back to the original first fractional matrix P better inherits prior knowledge of the source domain.
Finally, P is sent to the target domain, and the classifier (that is, the classifier 203 in FIG. 5, where the target domain classifier is shared between different scales) obtains a target domain fractional matrix:

$$\hat{Y} = \text{softmax}(\hat{P} \times \theta).$$

It should be noted that the target domain classifier has only one parameter matrix $\theta \in \mathbb{R}^{C_s \times C_t}$, and the matrix is shared in different length-width ratios and spatial scales. One reason is that each prior bounding box already contains bounding boxes at different length-width ratios and spatial scales that are important to the prior bounding box, and therefore does not need to allocate an independent parameter matrix to each spatial scale. More importantly, in a small sample condition (that is, a case in which there are few target images in the target domain), sharing the target domain classifier can greatly reduce occurrence of overfitting.

Finally, the target domain classifier may output a detection result. As shown in FIG. 10, an output detection result in the prior bounding box is "horse".

It should be noted that, in the foregoing embodiment of this application, compared with a conventional transfer learning, a manner of selecting and retaining the source domain classifier can better inherit rich prior knowledge from the source domain. In addition, retaining the source domain classifier can greatly reduce a quantity of parameters that need to be learned, to solve the overfitting problem. Compared with a small sample learning method for another classification task, the builder provided in the foregoing embodiment of this application pays more attention to an essential difference between target detection and a classification task, and uses a relationship between an object and a surrounding context as a basis to help resolve an object category confusion problem in a small sample condition. In addition, the pooling operation is performed in the process of constructing the bounding box set. This not only reduces a calculation workload, but also reduces difficulty of network learning.

It should be noted that, in the implementation corresponding to FIG. 10, the SSD-based detection framework is used as an example to describe an improvement of this application (that is, a builder and a source domain classifier are added). In some other implementations of this application, the builder and the source domain classifier may alternatively be embedded in another detection framework, for example, R-CNN, Fast R-CNN, Faster R-CNN, and YOLO detection frameworks. Principles are similar to those in the embodiment corresponding to FIG. 10, and details are not described herein again.

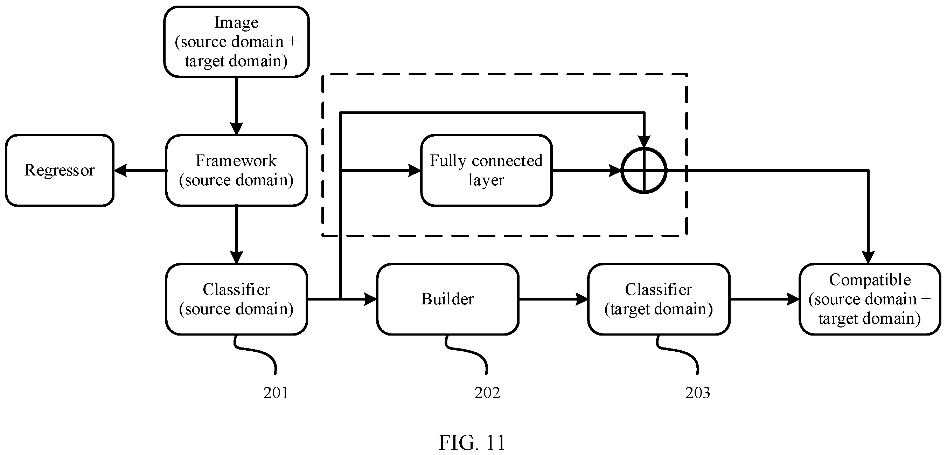

It should be further noted that the foregoing embodiment of this application mainly focuses on detection performance of the target domain. In actual application, many application scenarios also focus on detection performance of the source domain. In other words, the proposed detection framework should maintain detection performance of an original task while adding a new target task. Refer to FIG. 11. The builder 202 is extended to a setting of incremental learning. Different from FIG. 5, the fully connected layer (a part shown in a dashed box in FIG. 11) with a residual connection is added after the source domain classifier (that is, the classifier 201), and through this adaptive transformation, the target domain fractional matrix finally obtained by using the target domain classifier (that is, the classifier 203) is more compatible with the source domain fractional matrix obtained by using the source domain classifier. Finally, the target domain fractional matrix and the source domain fractional matrix are connected together to locate and classify the target object in the target image.

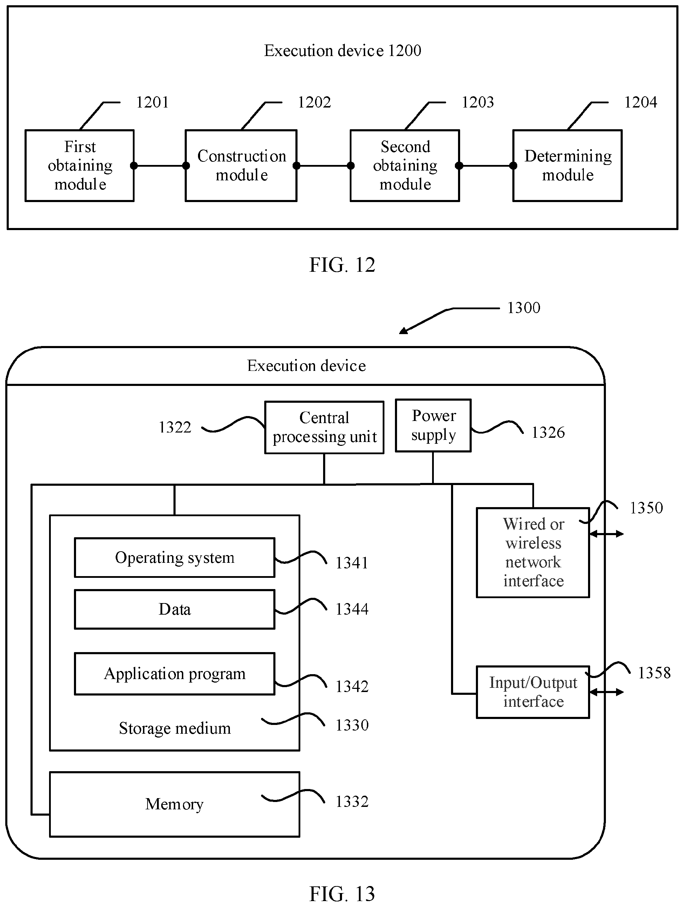

According to the embodiment corresponding to FIG. 6, to better implement the foregoing solutions in the embodiment of this application, the following further provides related devices configured to implement the foregoing solutions. For details, refer to FIG. 12. FIG. 12 is a schematic diagram of a structure of an execution device according to an embodiment of this application. An execution device 1200 includes: a first obtaining module 1201, a construction module 1202, a second obtaining module 1203, and a determining module 1204. The first obtaining module 1201 is configured to obtain a prior bounding box set of a target image, and the prior bounding box set includes one or more prior bounding boxes of the target image. The construction module 1202 is configured to construct a bounding box set based on the prior bounding box set. The bounding box set includes image information of at least one bounding box. The image information of at least one bounding box includes image information of one prior bounding box in the prior bounding box set. The second obtaining module 1203 is configured to obtain a correlation between any prior bounding box in the prior bounding box set and each bounding box in the bounding box set. The determining module 1204 is configured to determine, based on the correlation, a target object included in the any prior bounding box.

In the foregoing implementation of this application, after the first obtaining module 1201 obtains the prior bounding box set of the target image, the construction module 1202 constructs the bounding box set based on the prior bounding box set, the second obtaining module 1203 accordingly obtains a correlation between each prior bounding box in the prior bounding box set and each bounding box, and finally the determining module 1204 determines, based on the correlation, a location and/or a category of a target object included in any prior bounding box. That is, each module in the execution device performs a series of transformation operations on the bounding box set, to integrate a feature of each bounding box into a feature of a prior bounding box, so as to increase a degree of differentiation between objects included in the prior bounding box. Therefore, background information around an object in the target image is creatively used to help locate or classify the object. This resolves a problem that object categories in the target image are easily confused in a case of a small sample, and significantly improves detection accuracy.

In a possible design, the construction module 1202 is specifically configured to use, as one bounding box in the bounding box set, an area circled by combining any plurality of prior bounding boxes in the prior bounding box set. Alternatively, the construction module 1203 may be specifically further configured to extend outwards a neighborhood of an area circled by each prior bounding box in the prior bounding box set, to obtain the bounding box set. Further, the construction module 1203 may specifically expand, according to a preset proportion, the area circled by each prior bounding box in the prior bounding box set, to obtain a corresponding bounding box.

In the foregoing implementation of this application, several specific implementations of how the construction module 1202 constructs the bounding box set based on the prior bounding box set are provided, and are flexible.

In a possible design, the second obtaining module 1203 is specifically configured to: obtain an angle between any prior bounding box in the prior bounding box set and each bounding box in the bounding box set; and/or obtain a distance between any prior bounding box in the prior bounding box set and each bounding box in the bounding box set.

In the foregoing implementation of this application, several implementations of how the second obtaining module 1203 determines a correlation between any prior bounding box and each bounding box are provided, and are flexible.

In a possible design, the determining module 1204 is specifically configured to: determine a correlation whose value is greater than a preset threshold as a valid correlation; and determine, based on the valid correlation, the target object included in the any prior bounding box. Alternatively, the determining module 1204 may be specifically configured to: sort correlation values in descending order, and determine a correlation ranked before a preset sequence number as a valid correlation; and then determine, based on the valid correlation, the target object included in the any prior bounding box.

In the foregoing implementation of this application, several implementations of how the determining module 1204 determines the target object in the target image based on the correlation are specifically described, and some bounding boxes that do not contribute to a degree of differentiation of objects included in the prior bounding box are discarded, reducing a calculation amount.

In a possible design, the construction module 1202 may be further specifically configured to: obtain a first feature of the prior bounding box set, and construct a second feature of the bounding box set based on the first feature.

In a possible design, the construction module 1202 may be further specifically configured to obtain a first fractional matrix of the prior bounding box set.

In a possible design, the construction module 1202 may be further specifically configured to perform a pooling operation on the first fractional matrix to obtain a second fractional matrix of the bounding box set.

In the foregoing implementation of this application, a manner of how the construction module 1202 specifically constructs the bounding box set is described, and is operable.

In a possible design, the second obtaining module 1203 may be further specifically configured to: perform calculation on the first fractional matrix and the second fractional matrix according to a preset algorithm, to obtain a correlation matrix between the first fractional matrix and the second fractional matrix; determine, from the correlation matrix, a correlation coefficient between the any prior bounding box and each bounding box in the bounding box set; and finally perform a softmax operation on the correlation coefficient to obtain a weight coefficient, in the any prior bounding box, of each bounding box in the bounding box set. In a possible design, the preset algorithm may be a dot product kernel algorithm or a Euclidean distance algorithm.

In the foregoing implementation of this application, a manner of how the second obtaining module 1203 determines a correlation between a prior bounding box and each bounding box is described, and is operable.

In a possible design, the determining module 1204 may be further specifically configured to: perform weighted summation on each bounding box in the bounding box set based on the weight coefficient, to obtain a third fractional matrix, or couple the weight coefficient to the first fractional matrix through weighting calculation, to obtain a third fractional matrix; and finally determine, based on the third fractional matrix, the target object included in the any prior bounding box.

In the foregoing implementation of this application, a manner of how the determining module 1204 specifically determines the target object in the target image based on the correlation is described, and is operable.

In a possible design, the determining module 1204 is specifically configured to determine, based on the correlation, category information and/or location information of the target object included in the any prior bounding box.

It should be noted that content such as information exchange and an execution process between the modules/units in the execution device 1200 is based on a same concept as the method embodiment corresponding to FIG. 6 in this application. For specific content, refer to the descriptions in the foregoing method embodiments in this application. Details are not described herein again.

An embodiment of this application further provides an execution device. FIG. 13 is a schematic diagram of a structure of an execution device according to an embodiment of this application. For ease of description, only a part related to this embodiment of this application is shown. For specific technical details that are not disclosed, refer to the method part in embodiments of this application. Modules of the execution device described in the embodiment corresponding to FIG. 12 may be deployed on the execution device 1300, to implement functions of the execution device in the embodiment corresponding to FIG. 12. Specifically, the execution device 1300 is implemented by one or more servers. The execution device 1300 may vary greatly due to different configurations or performance, and may include one or more central processing units (central processing units, CPU) 1322 (for example, one or more processors) and a memory 1332, and one or more storage media 1330 (for example, one or more mass storage devices) that store an application program 1342 or data 1344. The memory 1332 and the storage medium 1330 may be transient storage or persistent storage. The program stored in the storage medium 1330 may include one or more modules (not shown in the figure), and each module may include a series of instruction operations for the training device. Further, the central processing unit 1322 may be configured to communicate with the storage medium 1330, and perform, on the execution device 1300, the series of instruction operations in the storage medium 1330.

The execution device 1300 may further include one or more power supplies 1326, one or more wired or wireless network interfaces 1350, one or more input/output interfaces 1358, and/or one or more operating systems 1341, such as Windows ServerTM, Mac OS XTM, UnixTM, LinuxTM, and FreeBSDTM.

In this embodiment of this application, the steps performed by the execution device in the embodiment corresponding to FIG. 6 may be implemented based on the structure shown in FIG. 13. Details are not described herein again.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An image processing method, comprising:

    obtaining a prior bounding box set of a target image, wherein the prior bounding box set comprises one or more prior bounding boxes of the target image;
    constructing a bounding box set based on the prior bounding box set, wherein the bounding box set comprises image information of at least one bounding box, and the image information of at least one bounding box comprises image information of one prior bounding box in the prior bounding box set;
    obtaining a correlation between any prior bounding box in the prior bounding box set and each bounding box in the bounding box set; and
    determining, based on the correlation, a target object comprised in the any prior bounding box.

**2.** The method according to claim 1, wherein the constructing a bounding box set based on the prior bounding box set comprises:
using, as one bounding box in the bounding box set, an area circled by combining any plurality of prior bounding boxes in the prior bounding box set.

**3.** The method according to claim 1, wherein the constructing a bounding box set based on the prior bounding box set comprises:
extending outwards a neighborhood of an area circled by each prior bounding box in the prior bounding box set, to obtain the bounding box set.

**4.** The method according to claim 3, wherein the extending outwards a neighborhood of an area circled by each prior bounding box in the prior bounding box set comprises:

expanding, according to a preset proportion, the area circled by each prior bounding box in the prior bounding box set; or
expanding each prior bounding box in the prior bounding box set horizontally and vertically according to different preset proportions.

**5.** The method according to any one of claims 1 to 4, wherein the obtaining a correlation between any prior bounding box in the prior bounding box set and each bounding box in the bounding box set comprises:

obtaining an angle between any prior bounding box in the prior bounding box set and each bounding box in the bounding box set; and/or
obtaining a distance between any prior bounding box in the prior bounding box set and each bounding box in the bounding box set.

**6.** The method according to any one of claims 1 to 5, wherein the determining, based on the correlation, a target object comprised in the any prior bounding box comprises:

determining a correlation whose value is greater than a preset threshold as a valid correlation; and
determining, based on the valid correlation, the target object comprised in the any prior bounding box.

**7.** The method according to any one of claims 1 to 5, wherein the determining, based on the correlation, a target object comprised in the any prior bounding box comprises:

sorting correlation values in descending order, and determining a correlation ranked before a preset sequence number as a valid correlation;

and
determining, based on the valid correlation, the target object comprised in the any prior bounding box.

**8.** The method according to any one of claims 1 to 7, wherein the constructing a bounding box set based on the prior bounding box set comprises:

obtaining a first feature of the prior bounding box set; and
constructing a second feature of the bounding box set based on the first feature.

**9.** The method according to claim 8, wherein the obtaining a first feature of the prior bounding box set comprises:
obtaining a first fractional matrix of the prior bounding box set.

**10.** The method according to claim 9, wherein the constructing a second feature of the bounding box set based on the first feature comprises:
performing a pooling operation on the first fractional matrix to obtain a second fractional matrix of the bounding box set.

**11.** The method according to claim 10, wherein the obtaining a correlation between any prior bounding box in the prior bounding box set and each bounding box in the bounding box set comprises:

performing calculation on the first fractional matrix and the second fractional matrix according to a preset algorithm, to obtain a correlation matrix between the first fractional matrix and the second fractional matrix;
determining, from the correlation matrix, a correlation coefficient between the any prior bounding box and each bounding box in the bounding box set; and
performing a softmax operation on the correlation coefficient to obtain a weight coefficient, in the any prior bounding box, of each bounding box in the bounding box set.

**12.** The method according to claim 11, wherein the determining, based on the correlation, a target object comprised in the any prior bounding box comprises:

performing weighted summation on each bounding box in the bounding box set based on the weight coefficient, to obtain a third fractional matrix, or
coupling the weight coefficient to the first fractional matrix through weighting calculation, to obtain a third fractional matrix; and
determining, based on the third fractional matrix, the target object comprised in the any prior bounding box.

13. The method according to claim 11 or 12, wherein the preset algorithm comprises:
a dot product kernel algorithm or a Euclidean distance algorithm.

14. The method according to any one of claims 1 to 13, wherein the determining, based on the correlation, a target object comprised in the any prior bounding box comprises:
determining, based on the correlation, category information and/or location information of the target object comprised in the any prior bounding box.

15. An execution device, wherein the device comprises:

a first obtaining module, configured to obtain a prior bounding box set of a target image, wherein the prior bounding box set comprises one or more prior bounding boxes of the target image;
a construction module, configured to construct a bounding box set based on the prior bounding box set, wherein the bounding box set comprises image information of at least one bounding box, and the image information of at least one bounding box comprises image information of one prior bounding box in the prior bounding box set;
a second obtaining module, configured to obtain a correlation between any prior bounding box in the prior bounding box set and each bounding box in the bounding box set; and
a determining module, configured to determine, based on the correlation, a target object comprised in the any prior bounding box.

16. The device according to claim 15, wherein the construction module is specifically configured to:
use, as one bounding box in the bounding box set, an area circled by combining any plurality of prior bounding boxes in the prior bounding box set.

17. The device according to claim 15, wherein the construction module is further specifically configured to:
extend outwards a neighborhood of an area circled by each prior bounding box in the prior bounding box set, to obtain the bounding box set.

18. The device according to claim 17, wherein the construction module is further specifically configured to:

expand, according to a preset proportion, the area circled by each prior bounding box in the prior bounding box set; or
expand each prior bounding box in the prior bounding box set horizontally and vertically according to different preset proportions.

19. The device according to any one of claims 15 to 18, wherein the second obtaining module is specifically configured to:

obtain an angle between any prior bounding box in the prior bounding box set and each bounding box in the bounding box set; and/or
obtain a distance between any prior bounding box in the prior bounding box set and each bounding box in the bounding box set.

20. The device according to any one of claims 15 to 19, wherein the determining module is specifically configured to:

determine a correlation whose value is greater than a preset threshold as a valid correlation; and
determine, based on the valid correlation, the target object comprised in the any prior bounding box.

21. The device according to any one of claims 15 to 19, wherein the determining module is further specifically configured to:

sort correlation values in descending order, and determine a correlation ranked before a preset sequence number as a valid correlation; and
determine, based on the valid correlation, the target object comprised in the any prior bounding box.

22. The device according to any one of claims 15 to 21, wherein the construction module is further specifically configured to:

obtain a first feature of the prior bounding box set; and
construct a second feature of the bounding box set based on the first feature.

23. The device according to claim 22, wherein the construction module is further specifically configured to:
obtain a first fractional matrix of the prior bounding box set.

24. The device according to claim 23, wherein the construction module is further specifically configured to:
perform a pooling operation on the first fractional matrix to obtain a second fractional matrix of the bounding box set.

25. The device according to claim 24, wherein the second obtaining module is further specifically configured to:

perform calculation on the first fractional matrix and the second fractional matrix according to a preset algorithm, to obtain a correlation matrix between the first fractional matrix and the second fractional matrix;

determine, from the correlation matrix, a correlation coefficient between the any prior bounding box and each bounding box in the bounding box set; and

perform a softmax operation on the correlation coefficient to obtain a weight coefficient, in the any prior bounding box, of each bounding box in the bounding box set.

26. The device according to claim 25, wherein the determining module is further specifically configured to:

perform weighted summation on each bounding box in the bounding box set based on the weight coefficient, to obtain a third fractional matrix, or couple the weight coefficient to the first fractional matrix through weighting calculation, to obtain a third fractional matrix; and

determine, based on the third fractional matrix, the target object comprised in the any prior bounding box.

27. The device according to claim 26, wherein the preset algorithm comprises:
a dot product kernel algorithm or a Euclidean distance algorithm.

28. The device according to any one of claims 15 to 27, wherein the determining module is specifically configured to:
determine, based on the correlation, category information and/or location information of the target object comprised in the any prior bounding box.

29. An execution device, comprising a processor and a memory, wherein the processor is coupled to the memory,

the memory is configured to store a program, and

the processor is configured to execute the program in the memory, so that the execution device performs the method according to any one of claims 1 to 14.

30. A computer-readable storage medium, comprising a program, wherein when the program is run on a computer, the computer is enabled to perform the method according to any one of claims 1 to 14.

31. A computer program product comprising instructions, wherein when the computer program product runs on a computer, the computer is enabled to perform the method according to any one of claims 1 to 14.

IT value chain

Intelligent information chain

Intelligent product and industry application

Translation/text analysis/...

Voice/vision/image/...

Data processing:

Data training/machine learning/deep learning

Search/inference/decision-making

⋮

Data

Infrastructure

Sensor

Intelligent chip

Base platform

⋮

FIG. 1

FIG. 2

FIG. 3

Target image
input

Prior
bounding box
determining

CNN feature
extraction

Classification
and location
adjustment

FIG. 4

Data collection
device 260

Image processing system 200

Data flow

Database
230

Training device
220

Data flow

Execution device 210

Input
data

I/O interface 212

Classifier
201

Classifier
203

Client
device
240

Builder 202

Data storage
system 250

Output
a result

Calculation module 211

FIG. 5

Obtain a prior bounding box set of a target image                    601

Construct a bounding box set based on the prior bounding box set      602

Obtain a correlation between any prior bounding box in the prior bounding box set and each bounding box in the bounding box set     603

Determine, based on the correlation, a target object included in the any prior bounding box     604

FIG. 6

FIG. 7

FIG. 8

FIG. 9

FIG. 10

FIG. 11

Execution device 1200

| First obtaining module 1201 | Construction module 1202 | Second obtaining module 1203 | Determining module 1204 |

FIG. 12

1300

Execution device

Central processing unit 1322    Power supply 1326

Operating system 1341

Data 1344

Application program 1342

Storage medium 1330

Memory 1332

Wired or wireless network interface 1350

Input/Output interface 1358

FIG. 13

# EP 4 102 463 A1

## INTERNATIONAL SEARCH REPORT

International application No.

**PCT/CN2020/114484**

**A. CLASSIFICATION OF SUBJECT MATTER**

G06T 7/73(2017.01)i; G06T 5/50(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 图像, 对象, 目标, 检测, 区域, 对象框, 检测框, 边界框, 集合, 边框集, 相关性, 关联性, 扩展, 合并, 范围, 分数矩阵, 池化, 先验框, 权重, softmax, image, object, region, detect+, frame, correlation, set, combin+, matrix, weight, expand+, extend+, enlarg+, score.

**C. DOCUMENTS CONSIDERED TO BE RELEVANT**

| Category* | Citation of document, with indication, where appropriate, of the relevant passages | Relevant to claim No. |
|---|---|---|
| X | CN 110033424 A (BEIJING MEGVII TECHNOLOGY CO., LTD.) 19 July 2019 (2019-07-19) description, paragraphs 107-216 | 1-8, 14-22, 28-31 |
| A | US 2020020105 A1 (TENCENT TECHNOLOGY (SHENZHEN) COMPANY LIMITED) 16 January 2020 (2020-01-16) entire document | 1-31 |
| A | CN 108009544 A (BEIJING XIAOMI MOBILE SOFTWARE CO., LTD.) 08 May 2018 (2018-05-08) entire document | 1-31 |
| A | CN 109977956 A (TENCENT TECHNOLOGY SHENZHEN CO., LTD.) 05 July 2019 (2019-07-05) entire document | 1-31 |
| A | CN 108470077 A (GUANGDONG UNIVERSITY OF TECHNOLOGY) 31 August 2018 (2018-08-31) entire document | 1-31 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 November 2020** | **27 November 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/114484** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 108597589 A (SHANGHAI UNITED IMAGING HEALTHCARE CO., LTD.) 28 September 2018 (2018-09-28)<br>      entire document | 1-31 |

Form PCT/ISA/210 (second sheet) (January 2015)

**INTERNATIONAL SEARCH REPORT**
Information on patent family members

International application No.

**PCT/CN2020/114484**

| Patent document cited in search report | | | Publication date (day/month/year) | Patent family member(s) | | | Publication date (day/month/year) |
|---|---|---|---|---|---|---|---|
| CN | 110033424 | A | 19 July 2019 | None | | | |
| US | 2020020105 | A1 | 16 January 2020 | CN | 109559344 | A | 02 April 2019 |
| | | | | EP | 3611702 | A1 | 19 February 2020 |
| | | | | WO | 2019062426 | A1 | 04 April 2019 |
| CN | 108009544 | A | 08 May 2018 | None | | | |
| CN | 109977956 | A | 05 July 2019 | None | | | |
| CN | 108470077 | A | 31 August 2018 | None | | | |
| CN | 108597589 | A | 28 September 2018 | None | | | |

Form PCT/ISA/210 (patent family annex) (January 2015)

**REFERENCES CITED IN THE DESCRIPTION**

**Patent documents cited in the description**

- CN 202010080653